(19) Europäisches Patentamt / European Patent Office / Office européen des brevets

(11) **EP 4 032 052 B1**

(12) **EUROPEAN PATENT SPECIFICATION**

(45) Date of publication and mention of the grant of the patent:
**14.02.2024 Bulletin 2024/07**

(21) Application number: **20885493.5**

(22) Date of filing: **06.11.2020**

(51) International Patent Classification (IPC):
**G06Q 20/00** *(2012.01)* **G06F 21/64** *(2013.01)*
**H04L 9/32** *(2006.01)* **H04L 9/00** *(2022.01)*
**G06Q 20/02** *(2012.01)*

(52) Cooperative Patent Classification (CPC):
**G06Q 20/02; G06F 21/64; H04L 9/3255;**
**H04L 9/50;** G06Q 2220/00; H04L 2209/56

(86) International application number:
**PCT/US2020/059473**

(87) International publication number:
**WO 2021/092434 (14.05.2021 Gazette 2021/19)**

(54) **PERFORMING TRANSACTIONS USING PRIVATE AND PUBLIC BLOCKCHAINS**

DURCHFÜHRUNG VON TRANSAKTIONEN MIT PRIVATEN UND ÖFFENTLICHEN BLOCKCHAINS

RÉALISATION DE TRANSACTIONS À L'AIDE DE CHAÎNES DE BLOCS PRIVÉES ET PUBLIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2019 US 201962933091 P**
**24.04.2020 US 202063015040 P**

(43) Date of publication of application:
**27.07.2022 Bulletin 2022/30**

(73) Proprietor: **Algorand, Inc.**
**Boston, MA 02116 (US)**

(72) Inventors:
• **GORBUNOV, Sergey**
**Boston, Massachusetts 02116 (US)**
• **MICALI, Silvio**
**Boston, Massachusetts 02116 (US)**
• **HERLIHY, Maurice**
**Boston, Massachusetts 02116 (US)**

(74) Representative: **Potter Clarkson**
**Chapel Quarter**
**Mount Street**
**Nottingham NG1 6HQ (GB)**

(56) References cited:
WO-A1-2018/189658    CN-A- 107 767 267
US-A1- 2016 330 034    US-A1- 2017 005 804
US-A1- 2017 103 385    US-A1- 2017 154 331
US-A1- 2019 052 454

EP 4 032 052 B1

**Description**

TECHNICAL FIELD

This description relates generally to performing transactions using private and public blockchains.

BACKGROUND

Blockchain systems are gaining popularity and adoption due to the robust security, transparency, and integrity properties they provide. Blockchain systems often operate in a public or permissionless model where any entity can join and participate in the consensus. As a result, transactions and balances are visible to entities that enter the network.
CN107767267 discloses a virtual resource transfer method, and the method is used for a decentration system which comprises a blockchain side chain and a main chain.
WO 2018/189658 discloses computer-implemented method includes: i) joining a congress by transferring, by a node operating in a proof-of- work blockchain network, one or more digital assets to a congress pool having one or more other digital assets associated with other members of a congress; ii) detecting, by the node, a special transaction of digital assets on the proof-of-work blockchain network to an address associated with the congress pool, the special transaction satisfying determined criteria; and iii) minting, by the node, one or more digital assets on a proof-of-stake blockchain network in response to detecting the special transaction.
US 2016/330034 discloses methods for transferring an asset from a parent chain to a sidechain.

SUMMARY

We disclose aspects of the invention in the independent claims. Among other things, we describe a method of enabling one or more entities of a blockchain system to carry out a series of operations. The blockchain system includes a main chain, a co-chain, wherein the co-chain has a corresponding account on the main chain, an asset owned by the corresponding account on the main chain and owned by an account on the co-chain, and a co-chain account possessing the asset. The operations include posting an authenticated transaction on the co-chain, the authenticated transaction authorizing a transfer of the asset from the co-chain account to an account of the main chain, determining that the authenticated transaction is posted on the co-chain, and posting, on the main chain, a transaction assigning the asset to the account of the main chain.
The benefits and advantages of the implementations include improved security, scalability, and decentralization of payment protocols using permissioned private blockchains compared to traditional methods. A cross-chain payment block is produced in a shorter time compared to other techniques and the block's transactions are immediately finalized. Further benefits and advantages include improved privacy and confidentiality for members of each private blockchain. Each private blockchain can conform to a regulatory regime for ensuring honest transactions. The implementations disclosed herein implement quicker, more secure, and more efficient mechanisms compared to traditional methods that use slower, ad hoc, and more vulnerable mechanisms.

BRIEF DESCRIPTION OF THE DRAWINGS

FIG. 1 shows an example block diagram of a payment network using multiple permissioned private blockchains.
FIG. 2 shows an example use case of a payment network using multiple permissioned private blockchains, in accordance with one or more implementations.
FIG. 3 shows an example process for using co-chains.
FIG. 4 shows an example process for transferring an asset using a co-chain.
FIG. 5 shows an example machine to implement a payment network using multiple permissioned private blockchains, in accordance with one or more implementations.

DETAILED DESCRIPTION

This specification describes techniques for the use of public and private blockchains and interoperability between them. A private blockchain communicably coupled to and interoperable with a public blockchain is called a "co-chain." A co-chain can be created that has access restricted to a limited number of entities (a characteristic we sometimes refer to as "permissioned") and is private to those granted access (e.g., those who have not been granted access cannot observe activity on the co-chain and/or engage in transactions on the co-chain). For example, private co-chains can be instantiated by institutions or individuals to preserve the privacy of transactions and individuals' balances. Moreover, co-chains can scale to meet the high speed and regulatory requirements of their stakeholders. Such a co-chain can use the Algorand consensus protocol for transactions. Hence, a private counterpart of the public Algorand blockchain can be implemented.

Although the private co-chain is permissioned, validators are used to register private co-chain transactions with the main chain. For example, once a transaction is created on the private co-chain, a validation request associated with the transaction is transmitted to validator devices of the private co-chain. The validators generate a commitment associated with the transaction as validation of the transaction. The commitment can be used to verify that a transaction occurring on the private co-chain is valid (e.g., to confirm that an entity who is exchanging an asset does in fact own that asset). The commitment can be "zero-knowledge" and need not reveal any information about individual blocks or the cryptoasset transaction on the private co-chain. Further, the commitment can be added to both the private co-chain and to the main chain.

Co-chains are used to perform cryptoasset transactions, such as transferring amounts of cryptocurrency, making cryptoasset transfers, or transactions using fungible tokens. An institution can issue a transaction on the public blockchain that assigns particular assets to the private co-chain. The mapping between the private co-chain and its complete list of assets will be recorded and updated via the public blockchain. The methods described here implement quicker, more secure, and more efficient mechanisms compared to traditional methods that use slower, ad hoc, and more vulnerable mechanisms.

Example Scenario Using Private Blockchains

As an example of a co-chain in use, a co-chain C is associated with an account A on the main chain. For the purposes of this example, a "main chain" is a public blockchain, and a "co-chain" is a private blockchain, e.g., a blockchain whose transactions are only visible to a particular set of entities and which only accepts transactions made by the particular set of entities. An "account," sometimes referred to an address, is a value that possesses cryptoassets by way of a mathematical association between the value and the assets. An account is sometimes represented by a public key, such that the owner of the public key (e.g., the owner of the corresponding private key) can access the assets possessed by the account. Put another way, the owner of the public key possess the account corresponding to the public key. The entities who possess, or "own," accounts of a blockchain, are sometimes referred to as members of the blockchain.

The main chain includes records indicating that account A on the main chain owns a set of assets. Those assets are owned by one or more accounts on co-chain C. Members of the main chain do not have access to information about which accounts X on co-chain C own the particular assets of account A. In some examples, the main chain does not need to retain information that the account A is associated with the specific co-chain C. This, in those examples, members of the main chain may not even know that account A corresponds to co-chain C.

When a co-chain account X wishes to transfer asset B to a public key PK (e.g., a destination public key) on the main chain, the account X authenticates what it intends to do, for example, by computing the digital signature SIGx(B,PK,MAIN) and posting this signature on a block of the co-chain C as part of a transaction T. Such posting succeeds because it is indeed true that account X owns asset B in co-chain C (e.g., the block containing the will not be added to the co-chain C unless the transaction T is valid). The validators of the co-chain C authenticate to the account A that, on the main chain, it should transfer asset B to PK. For instance, they can deliver to account A (e.g., cause account A to receive) "SIGc(B,PK)". Here "SIGc(B,PK)" refers to a set of digital signatures of co-chain C's validators that correspond to a majority of the voting stake of co-chain C's validators. For example, if each validator of co-chain C has the same voting power as any other validator of co-chain C's, and if there are 100 validators in co-chain C, then SIGc(B,PK) corresponds to a digital signature of 80 validators of (B,PK).

As another example, the validators of co-chain C may use a threshold signature scheme. In such a scheme a public (verification) key PK may not have a corresponding secret (signing) key SK that is known to a single entity. Rather, each validator i knows only a share SKi of SK. Using SKi, validator i can compute the validator's own "partial signature" (B,PK). However, given sufficiently many such partial signatures (e.g., 66 out of 100) one can compute the full signature SIG(B,PK), which is an ordinary signature relative to PK and can thus be verified easily knowing only PK. In this case, one can set SIGc(B,PK)=SIG(B,PK). The advantage of this approach is that (B,PK) is authenticated by a single signature, rather than multiple signatures, yet one is guaranteed that sufficiently many verifiers must have collaborated to its computation, and thus that sufficiently many verifiers vouch for the transfer of asset B to PK on the main chain.

In some examples, the account A corresponding to co-chain C on the main chain, may also be an account of co-chain C. As another example, the account A is authorized to monitor co-chain C. In these examples, the validators of co-chain C need not send a separate SIGc(B,PK) to account A. For example, account A can post on the main chain a transaction assigning B to PK the moment it sees that a proper transaction is posted by an account X on co-chain C authorizing the transfer of asset B to a key PK on the main chain.

To avoid that accounts A may assign assets belonging to accounts of co-chain C (to one or more public keys PK) without the authorization of co-chain C, we ensure that the public key PKa of account A in the main chain (e.g., the public key that account A uses to authorize the transfer of asset B to PK on the main chain) is a public key of a threshold signature scheme and that the corresponding secret key is not known to account A (or any other entity associated with the blockchain system). Rather, each of the verifiers of co-chain C owns a share of SK and they may use to compute the digital signature by which account A authorizes the transfer of asset B to PK on the main chain. That is, assuming that this signature is SIG(B,PK), then each verifier produces its own partial signature and the full signature is assembled from such partial signatures by account A, or the full signature is first assembled (e.g., by any entity associated with the blockchain) and then made available to account A. In this way, only the verifiers of c can compute a signature authorizing the transfer of asset B to PK on the main chain, and will do this only in response to a proper posting of asset B in the co-chain C.

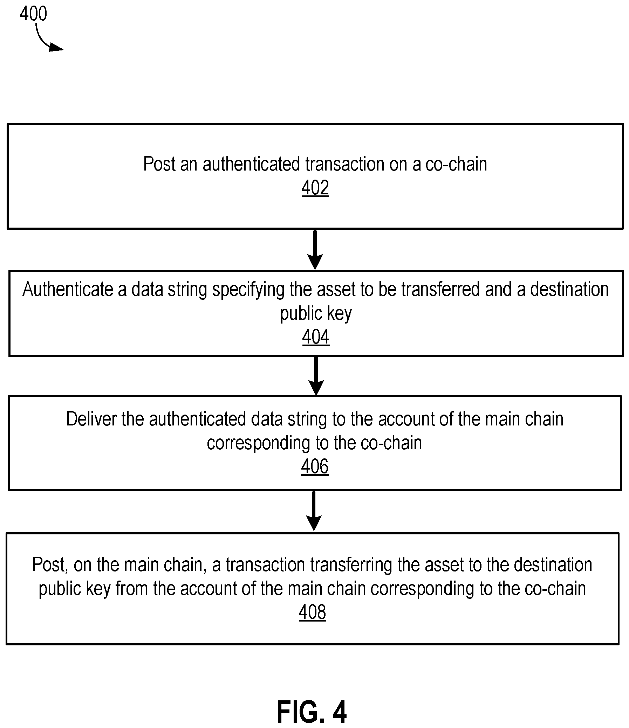

The techniques described in this example are described further below with respect to FIG. 4.

Example Implementations of Co-Chains

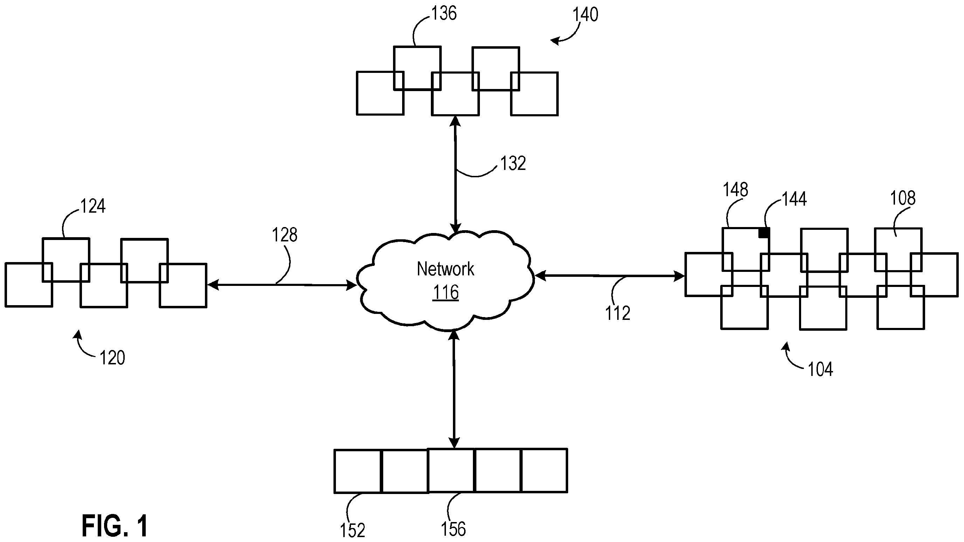

FIG. 1 shows an example block diagram of a payment network using multiple co-chains 120, 140. The payment network includes the co-chains 120, 140, a public blockchain 104, and a network 116. The network 116 can include portions of the Internet or a local network. In other implementations, the payment network can include additional or fewer components, and the components can be connected in a different manner.

The co-chains 120, 140 can be used to perform cryptoasset transactions, such as transferring amounts of cryptocurrency, making cryptoasset transfers, or transactions using fungible tokens. An institution or administrator (e.g., of the public blockchain 104) and the co-chain 120 agree on a set of assets that belong to the co-chain 120. For example, the institution can issue a transaction on the public blockchain 104 that assigns particular assets to the co-chain 120. The mapping between the co-chain 120 and its complete list of assets will be recorded and updated via the public blockchain 104. For example, the assets belonging to accounts on the co-chain 120 may be assigned to a particular account on the public blockchain 104, such that from the perspective of members of the public blockchain 104, the account possesses all assets belonging to accounts on the co-chain 120.

A cryptoasset transaction transfers a particular amount of a cryptoasset from one cryptoasset account to another. A cryptoasset can refer to a cryptocurrency, e.g., Algo, that is designed to work as a medium of exchange that uses cryptography to secure financial transactions, control the creation of additional units, or verify the transfer of cryptoassets. A cryptoasset can also refer to a secure record of an asset, such as an automobile title or mortgage that is managed by a blockchain.

A cryptoasset account enables an entity who possess the account to store cryptoassets and/or manage balances of cryptocurrencies. Each cryptoasset account has an account identifier, which is a unique identifier. The cryptoasset account shows the current balance for the cryptoasset and displays the entity's transactions. An entity can send a request to another party having another cryptoasset account for a specific amount of cryptoassets.

The implementations herein relate to methods and mechanisms for transferring a cryptoasset from a private blockchain (e.g., co-chain 120) to a public blockchain 104. The implementations disclosed herein implement quicker, more secure, and more efficient mechanisms compared to traditional methods that use slower, ad hoc, and more vulnerable mechanisms. The implementations can be used for implementing an asset control and transfer system, for example, for financing related to automobile titles or mortgages related to real estate. Multi-chain cryptographic transactions can address many scenarios and reduce the need for more complex and computationally expensive smart contracts. An asset exchange can be implemented where a transaction includes exchanging some amount of one asset for another. A non-fungible token (NFT) exchange can be implemented where an NFT is exchanged for some amount of a fungible token (e.g., Algo).

A co-chain (e.g., co-chains 120, 140) can be created that has restricted access (permissioned) and is private. In some examples, a co-chain uses the Algorand consensus protocol. Although the co-chain is permissioned, the implementations disclosed herein seek to use as many validators 152 as are available, to improve security. Hence, a private version of the public Algorand blockchain 104 can be created that can perform atomic swaps on Layer 1. Layer 1 refers to the underlying main blockchain architecture. Using this architecture, a co-chain can readily communicate with a public blockchain (e.g., the public blockchain 104) and serves as a bridge to the public blockchain. Assets can thus be transferred to the public blockchain. For example, an entity may wish to sell an asset. If the entity auctions the asset, the auction can be performed on the public blockchain with more bidders than would be available on a co-chain.

In some implementations, an asset is transferred from an account of an entity on the co-chain 120 to a public key 144 of the entity in the public blockchain 104. Because the public blockchain 104 is permissionless, the public blockchain 104 accepts the public key 144, e.g., when the public key 144 is generated. The public blockchain 104 records that a public key 144 has obtained the asset. For example, a set of assets can be transferred from the co-chain 120 to the public blockchain 104 using a single block 124 of the co-chain. Prior to the transfer, the block 124 is structured using hashes. The transferring entity signs a hash of the block 124.

In some implementations, a transfer from the co-chain 120 to the public blockchain 104 is hashed. A transfer from the co-chain 120 to the co-chain 120 is also hashed. Both hashes appear in the block 124. Both the hashes are certified to reveal the co-chain 120 to the public blockchain 104 transfer without revealing the co-chain 120 to co-chain 120 transfer. A check is performed to determine whether the transfers hash to the quantity of the asset that is part of the block 124.

A first entity that has access to the public blockchain 104 will be informed of the co-chain 120 to the public blockchain 104 transfer. When a second entity asserts that it is a validator 152 of the co-chain 120, the first entity determines whether the certificate is indeed signed by the second entity using matching techniques. The validators 152 can be weighted, e.g., a trusted validator is assigned a higher weight. If the sum of weights is sufficient, the first entity determines that the block 124 is valid. The asset transferor's key and the transferee key 144 are recorded in the block 148.

An additional method to perform an asset transfer is to transfer the asset to a key (e.g., the key 144) in the public blockchain 104. The first entity then makes a record indicating that the key 144 in the public blockchain 104 and the asset are joined. The public blockchain 104 is made aware of the identities of the validators 152. Each time a validator 152 is changed (e.g., a weight is added or subtracted, or the validator 152 is re-weighted), a quorum of the previous set of validators 152 either specify or sign off on the set of new validators 152. In some implementations, the public blockchain 104 is configured to tolerate a small change in the validator information. A part of the blocks 124, 148 can be reserved to include new validators 152. For example, when the block 124 includes a cryptoasset transfer from the co-chain 120 to the co-chain 140, the block 124 includes a field for a validator change. A first node of the public blockchain 104 is enabled to observe functions of the co-chain 120. The first node is thus aware of transfers on the co-chain 120. A second node of the public blockchain 104 is enabled to observe functions of the co-chain 140.

In some implementations, a spokesman 156 is used to facilitate transfers. For example, 100 validators can be present in the blockchain system illustrated in FIG. 1. A transaction would need at least 60 validators to sign off on the block 148. In such implementations, a spokesman 156 can be used. A single signature of the spokesman 156 would be sufficient for validation. However, the spokesman 156 could represent a single point of failure. For example, if the spokesman 156 signs information about transfers on the co-chain 120 and the spokesman 156 is malicious or compromised, there will be 20 blocks to object. The validators 152 can block the validation and the transfer is rendered null and void. A single or more spokesmen can be used. Only validators 152 are enabled to inform the public blockchain 104 that the spokesman 156 has changed.

In some implementations, the managing entity of the public blockchain 104 is not represented by an ad hoc key 144 but a known entity against whom there is a right to recourse, for example, a right to audit or punish. An additional note field can be added to the block 148 containing instructions for subsequent processing of the asset, e.g., conduct an auction. The note field can be encrypted. The note field can indicate a transfer to a manager of the co-chain 120 or to another key. The note field can indicate an instruction to dispose of the assets. In some implementations, the time to cure is zero, i.e., the spokesman 156 is trusted. Thus both permissionless and permissioned blockchains are used.

In some implementations, validators 152 associated with a co-chain 120 receive a validation request associated with a cryptoasset transaction. The validation request prompts each validator 152 to validate the cryptoasset transaction. At least one spokesman 156 is identified to certify data on behalf of the validators 152. The spokesman 156 posts data on the public blockchain 104 that is communicably coupled to the co-chain 120. The validators 152 determine whether the data is valid. In response to the determination, the validators 152 post a challenge to the data to the public blockchain 104. In some implementations, the challenge is posted to the public blockchain 104 before a threshold number of new blocks (e.g., 20 blocks) have been added to the public blockchain 104. In some implementations, the data is associated with a commitment 128.

Each validator 152 can be assigned a weight indicating a degree that the validator 152 is trusted. Determining that the data is valid is performed in response to a sum of weights of the validators 152 exceeding a threshold weight. In some implementations, the public blockchain 104 receives a message indicating an identity of each validator, the weight assigned to each validator, and a determination that the sum of weights of the validators 152 exceeds the threshold weight. The public blockchain 104 records a first key 144 of a cryptoasset transferor of the cryptoasset transaction and a second key of a cryptoasset transferee of the cryptoasset transaction in a new block 148 of the public blockchain 104.

In some implementations, the public blockchain 104 receives a message indicating a desired transfer of the cryptoasset to the cryptoasset transferee. The public blockchain 104 records a transfer of the cryptoasset to the cryptoasset transferee. In some implementations, a time to cure associated with the cryptoasset transaction is less than a threshold time to cure indicating that the at least one spokesman 156 is trusted. The cryptoasset transaction can transfer a cryptoasset from the co-chain 120 to the public blockchain 104. The cryptoasset transaction can transfer a cryptoasset from the public blockchain 104 to the co-chain 120. The cryptoasset transaction can transfer a cryptoasset from the co-chain 120 to a second co-chain 140. The cryptoasset transaction is facilitated by the public blockchain 104. A message passing architecture is used, such that the private co-chains 120, 140 can be even more decentralized than the public blockchain 104.

The co-chain 120 can be owned or administered by a large bank or a nation state. The co-chain 120 can use the public blockchain 104 as a security mechanism for itself. For example, the participants of the co-chain 120 may place a high level of trust in the public blockchain 104. Hence, the co-chain 120 can perform a hash of the entire block 124 and put it on the public blockchain 104. If every 100 blocks, a hash is taken of a block on the co-chain 120, the computation can be restarted from that block. In such a case, not only the transactions are hashed, but the entire balance of each entity owning an asset at a given point.

In some implementations, when a co-chain 120 creates a new asset, the co-chain 120 can create the asset on the public blockchain 104 and then transfer it back to the co-chain 120. This is done because when a participant of the co-chain 120 later wishes to sell the asset, the public blockchain 104 has a record of ownership of the asset on the co-chain 120. If the co-chain 120 is compromised, an asset created on the public blockchain 104 is harder to double-sell (double-spend) on the co-chain 120 than if the asset were first created on the co-chain 120. For example, the public blockchain 104 can perform certain checks. The public blockchain 104 can check the spokesman 156 and also check that the asset is still owned by the co-chain 120.

Transfer of Cryptoassets Between Two Private Co-Chains Facilitated by a Public Blockchain

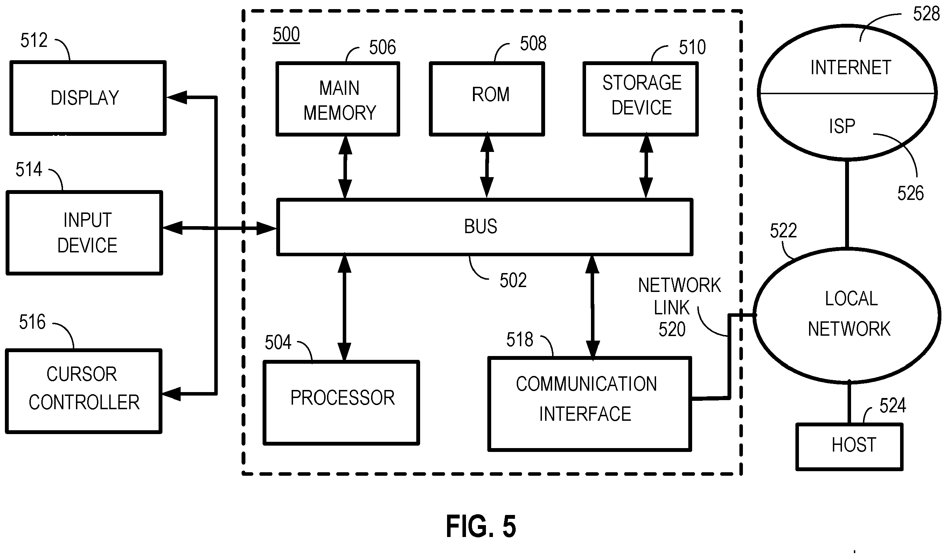

In some implementations, a user device instantiates a cryptoasset transaction on a first private blockchain 120 to transfer a first amount of a first cryptoasset from a first cryptoasset account 124 to a second cryptoasset account 136 associated with a second private blockchain 140. The user device can be a cellphone, computer, or tablet implemented as illustrated and described in more detail with reference to FIG. 5. Validator devices 152 validate the first cryptoasset transaction to generate a first commitment 128 associated with a first one-time key 144. A first computer device associated with the first private blockchain 120 posts the first commitment 128 on the public blockchain 104. The first computer device can be a desktop, laptop, or server implemented as illustrated and described in more detail with reference to FIG. 5. A second computer device associated with the public blockchain 104 assigns the first amount of the first cryptoasset to the first one-time key 144 on the public blockchain 104. The second computer device can be a desktop, laptop, or server implemented as illustrated and described in more detail with reference to FIG. 5. The second computer device performs an atomic swap between the first amount of the first cryptoasset and a second amount of a second cryptoasset. The second amount of the second cryptoasset is assigned to a second one-time key associated with a second commitment 132. The second commitment 132 is to transfer the second amount of the second cryptoasset from the second cryptoasset account 136 to the first cryptoasset account 124.

In some implementations, a key other than a one-time key is assigned the first cryptoasset. For example, the key could be a key used by the first private blockchain 120 for all transfers of cryptoassets to the public blockchain 104.

In some implementations, a first user device associated with a first cryptoasset account 124 on the permissioned co-chain 120 instantiates a cryptoasset transaction. A first computer device (such as an administrator device) associated with the co-chain 120 generates a private key using elliptic curve cryptography. The private key is for signing the cryptoasset transaction by the first user device. The cryptoasset transaction is to transfer a first amount of a first cryptoasset from the first cryptoasset account 124 (on co-chain 120) to a second cryptoasset account 136 (on co-chain 140). The first cryptoasset can include automobile titles, mortgages, bonds, or stocks, etc. The transfers between the public blockchain 104 and the co-chain 120 are done by (a) withdrawing the first cryptoasset from the co-chain 120 and subsequently (b) depositing it to the public blockchain 104. The second cryptoasset account 136 is associated with the co-chain 140. The transaction is private to the co-chain 120. Such a transaction and the block 124 of the co-chain 120 does not propagate to the public blockchain 104 unless posted by an administrator of the co-chain 120.

In some implementations, the first user device generates a first one time key 144 that anonymizes an identity of the first cryptoasset account 124. In other implementations, a user device can transfer a cryptoasset to a long-term key with less reliance on anonymity. A set of validator devices 152 of the co-chain 120 receive a validation request associated with the cryptoasset transaction. The validator devices 152 are associated with the co-chain 120. The first computer device (of co-chain 120) can register the validator devices 152 on the public blockchain 104. Each validator device has a different public key for validating cryptoasset transactions. Thus, a co-chain 120, 140 registers a set of validators' public keys on the public blockchain 104. The private co-chain administrators can issue a transaction "create private chain" that includes a set of validators 152 that must sign each block 124.

In some implementations, the validation request prompts each validator 152 to validate the cryptoasset transaction. The public blockchain 104 tracks a set of public keys authorized to be validators 152 for each co-chain 120, 140. The validators 152 validate the cryptoasset transaction to generate a commitment 128 associated with the first one-time key 144. The validators 152 can be cellphones, computers, or tablets, etc. Each co-chain 120 can thus perform independent consensus on each block 124 of transactions. The first computer device associated with the co-chain 120 posts the commitment 128 on the public blockchain 104. In this manner, the co-chain 120 can meet regulatory obligations. To post the commitment 128 on the public blockchain 104, the first computer device encrypts auxiliary information associated with the cryptoasset transaction using attribute-based encryption. For example, each entry in a balance table is denoted by Ei. The private co-chain validators 152 produce a commitment: Chain_1_Commit_Round_R on the collection of entries E1, ..., EN. At the end of the round, the co-chain validators 152 produce a certificate Chain_1_Cert_Round_R authorizing the commitment Chain_1_Commit_Round_R.

Self-validating transactions can be created in different implementations. In some implementations, commitments 128 to records are instantiated as well as self-validating transactions are performed. For example, the private co-chain validators 152 can produce two commitments. One commitment corresponds to withdrawal requests, and the second commitment corresponds to other balances within the co-chain 120. In other implementations, the validators 152 can reveal each withdrawal request, without needing to generate extra proofs. In yet other implementations, a self-validating transaction includes a transaction that is posted on a non-private area of a block 124. Such a transaction can be part of a block header that can include a hash of a previous block, a block number, a set of non-private transactions, and a commitment 128 to a set of private transactions. A certified block header of a co-chain 120 thus enables transactions that transfer assets from a co-chain 120 to a permissioned chain 140 to validate themselves.

In some implementations, the first user device (associated with the first cryptoasset account 124 of co-chain 120) authenticates a proof 112 of the cryptoasset transaction. The proof 112 is associated with the commitment 128. The first user device posts the authenticated proof 112 on the public blockchain 104. Thus, a certificate and the commitment 128 are posted on the public blockchain 104. The commitment 128 is designed to be "zero-knowledge" and does not reveal any information about individual entries E1, ..., EN on the blockchain 104.

A second computer device (such as an administrator device of the public blockchain 104) is associated with the public blockchain 104. The second computer device assigns the first amount of the first cryptoasset to the first one-time key 144 on the public blockchain 104. The blockchain 104 can store the assignment in a balance table entry. For each round, the validators 152 of the co-chain 120 reach an agreement on the balance table of assets. Each block 124 produced by the co-chain 120 thus includes the commitment 128 to the balance table entries. The second computer device removes the first amount of the first cryptoasset from a balance table associated with the co-chain 120. The second computer device (of the blockchain 104) also removes the second amount of the second cryptoasset from another balance table of the public blockchain 104 that is associated with the co-chain 140. In some implementations, the second computer device assigns the second amount of the second cryptoasset to a second one-time key on the public blockchain 104. The second one-time key anonymizes an identity of the second cryptoasset account 136 on the co-chain 140. In other implementations, a second user device can transfer the second cryptoasset to a second long-term key with less reliance on anonymity.

The second computer device performs an atomic swap between the first amount of the first cryptoasset and the second amount of the second cryptoasset. The swap between the first amount of the first cryptoasset and the second amount of the second cryptoasset is atomic, meaning that the exchange is isolated from other transactions that can be happening at the same time. The swap is thus indivisible, such that the exchange is performed without any other transaction appearing in between. The second one-time key is associated with the commitment 132. The commitment 132 is to transfer the second amount of the second cryptoasset from the second cryptoasset account 136 to the first cryptoasset account 124. The commitment 132 results from a block in the co-chain 140. Two honest private co-chains 120, 140 can thus exchange cryptoassets via the public blockchain 104. The public blockchain 104 will update the co-chain balances accordingly.

In some implementations, the second computer device (of blockchain 104) stores a record of the atomic swap in a distributed transaction ledger of the public blockchain 104. The record references the private co-chains 120, 140. Thus, two users U1 and U2 that belong to two separate private co-chains 120, 140 can swap assets captured in records E1 and E2 on the respective private co-chains 120, 140. In some implementations, the public blockchain 104 includes a currency exchange. A first cryptoasset can be a first currency, and a second cryptoasset can be a second currency.

In some implementations, the public blockchain 104 includes a non-fungible token (NFT) exchange. The first cryptoasset is an NFT and the second cryptoasset is a set of fungible tokens. The payment network can thus generate and transact fungible cryptocurrency tokens associated with a particular cryptocurrency. A token is fungible if any two of its units are interchangeable. An example of a fungible token is when any two units have the same purchasing power. In some implementations, the public blockchain 104 includes an NFT exchange, where the first cryptoasset is a first NFT and the second cryptoasset is a second NFT. For example, the second computer device can generate an NFT on the blockchain 104. The NFT tokenizes the first cryptoasset. In some implementations, a government or an institution wishes to tokenize an asset. The institution can create a new token on the blockchain 104 using standard token creation API calls. The institution can then remain as the asset administrator.

The second computer device (of blockchain 104) updates a balance table of the public blockchain 104 with the second amount of the second cryptoasset. The balance table is associated with the co-chain 120. The public blockchain 104 maintains "balances" of assets for each co-chain 120, 140, such that the private co-chains 120, 140 can transact with other co-chains. The first user device (associated with the first cryptoasset account 124) initiates another cryptoasset transaction to transfer the second amount of the second cryptoasset from the public blockchain 104 to the co-chain 120. In some instances the private co-chain administrator can be the same as the institution that creates the asset on the public blockchain 104. Thus, the cryptoassets have been exchanged.

In some implementations, a user device generates a first one-time key 144 anonymizing an identity of a first cryptoasset account 124 of the co-chain 120. Thus, private co-chains allow users to transact privately in closed network environments. Transactions that propagate in the co-chain 120 are not visible to the entire world. The user device instantiates a cryptoasset transaction on the co-chain 120 to transfer an amount of a cryptoasset from the first cryptoasset account 124 to a second cryptoasset account 136 of the co-chain 120. A computer device (administrator of co-chain 120) can generate a private key using elliptic curve cryptography, the private key for signing the cryptoasset transaction by the user device. An identity of the second cryptoasset account 136 is anonymized by a second one-time key. The computer device (administrator of co-chain 120) registers a set of validators 152 on the public blockchain 104. Each validator 152 has a different public key for validating cryptoasset transactions. For each such round R, the validators 152 of the co-chain 120 reach an agreement on the balance table of assets. Each block 124 produced by the co-chain 120 includes a commitment of the balance table entries.

The validators 152 associated with the co-chain 120 receive a validation request associated with the cryptoasset transaction. The validation request prompts each validator 152 to validate the cryptoasset transaction. Each co-chain 120, 140 can perform independent consensus on each block of transactions. The validators 152 validate the first cryptoasset transaction to generate a commitment 128 associated with the first one-time key 144 and the second one-time key. The user device authenticates a proof 112 of the cryptoasset transaction. The proof 112 is associated with the first commitment 128. The user device posts the authenticated proof 112 on the public blockchain 104. Thus, the co-chain 120 can meet regulatory obligations. The computer device (administrator) associated with the co-chain 120 adds the cryptoasset transaction to a block 124 of the co-chain 120. The block 124 references the commitment 128. Thus, the transactions and blocks 124 of private co-chains 120 do not propagate to the public blockchain 104.

Responsive to adding the cryptoasset transaction to the block 124, the computer device posts the commitment 128 on the public blockchain 104 that is communicably coupled to the co-chain 120. The computer device encrypts auxiliary information associated with the cryptoasset transaction using attribute-based encryption. Co-chain administrators can manage the visibility of individual transactions and co-chain assets utilizing standard network protocols and access control policies. Moreover, the administrators can meet their required regulatory obligations and speed requirements of their customers. The certificate 112 and the commitment 128 are posted on the blockchain 104. The computer device performs an atomic swap of the amount of the cryptoasset from the first cryptoasset account 124 to the second cryptoasset account 136 on the co-chain 120. The public blockchain 104 stores a record 108 of the cryptoasset transaction in a distributed transaction ledger of the public blockchain 104. The record 108 references the commitment 128.

In some implementations, a user device generates a first one-time key 144 anonymizing an identity of the first cryptoasset account 124 of the private blockchain 120. The user device is associated with the first cryptoasset account 124. The user device instantiates a cryptoasset transaction on the private blockchain 120 to transfer an amount of a cryptoasset from the first cryptoasset account 124 to a second cryptoasset account 136 of the private blockchain 140, an identity of the second cryptoasset account 136 anonymized by a second one-time key. Validator devices 152 associated with the private blockchain 120 receive a validation request associated with the cryptoasset transaction. The validation request prompts each validator device 152 to validate the cryptoasset transaction. The validator devices 152 validate the cryptoasset transaction to generate a commitment 128 associated with the first one-time key 144 and the second one-time key. A computer device associated with the private blockchain 120 posts the cryptoasset transaction to a block of the private blockchain 120. The computer device can be a desktop, laptop, or server implemented as illustrated and described in more detail with reference to FIG. 5. The block references the commitment 128. Responsive to posting the cryptoasset transaction to the block, the computer device posts the commitment 128 on the public blockchain 104 that is communicably coupled to the private blockchain 120.

Transfer Between a Private Co-Chain and the Public Blockchain.

In some implementations, a user device instantiates a cryptoasset transaction on a private blockchain 120 to transfer an amount of a cryptoasset from a first cryptoasset account 124 on the private blockchain 120 to a second cryptoasset account on a public blockchain 104. Validator devices 152 validate the cryptoasset transaction to generate a commitment 128 associated with a one-time key 144. A first computer device associated with the private blockchain 120 posts the commitment 128 on the public blockchain 104. A second computer device associated with the public blockchain 104 assigns the amount of the cryptoasset to the one-time key 144 on the public blockchain 104. The second computer device performs an atomic swap of the amount of the cryptoasset between the one-time key 144 and the second cryptoasset account, such that the amount of the cryptoasset is assigned to the second cryptoasset account on the public blockchain 104.

In some implementations, a user device instantiates a cryptoasset transaction on a public blockchain 104 to transfer an amount of a cryptoasset from a first cryptoasset account of the public blockchain to a second cryptoasset account on a private blockchain 120. Validator devices 152 validate the cryptoasset transaction to generate a commitment 128 associated with a one-time key 144. A computer device associated with the public blockchain 104 posts the commitment 128 on the public blockchain 104. The computer device associates the one-time key 144 with the second cryptoasset account. The computer device assigns the amount of the cryptoasset to the one-time key 144. The computer device transfers the amount of the cryptoasset to the private blockchain 120.

In some implementations, a first computer device associated with a co-chain 120 generates an amount of a cryptoasset on a public blockchain 104. The amount of the cryptoasset is assigned to a one-time key 144 anonymizing a cryptoasset account 124 of the private blockchain 120 that is communicably coupled to the public blockchain 104. The first computer device instantiates a cryptoasset transaction to transfer the amount of the cryptoasset from the public blockchain 104 to the cryptoasset account 124 of the private blockchain 120 using the one-time key 144. At least one spokesman 156 of multiple validators 152 validates the cryptoasset transaction. A second computer device associated with the public blockchain 104 performs at least one check associated with the cryptoasset transaction. The first computer device transfers the amount of the cryptoasset from the public blockchain 104 to the cryptoasset account 124 of the private blockchain 120 using the one-time key 144.

In some implementations, a key other than a one-time key is assigned the first cryptoasset. For example, the key could be a key used by the first private blockchain 120 for all transfers of cryptoassets to the public blockchain 104.

Identification of a Spokesman to Certify Data

In some implementations, validators 152 associated with a private blockchain 120 receive a validation request associated with a cryptoasset transaction. The validation request prompts each validator 152 to validate the cryptoasset transaction. At least one spokesman 156 is identified to certify data on behalf of the validators 152. The at least one spokesman 156 posts data on a public blockchain 104 that is communicably coupled to the private blockchain 120. The validators 152 determine whether the data is valid. In response to the determination, the validators 152 post a challenge to the data to the public blockchain 104. The spokesman can then be verified when it responds to the challenge.

In some implementations, a spokesman 156 associated with a private blockchain 120 identifies data from one or more blocks of the private blockchain 120. The spokesman 156 determines that the data has been validated by one or more validators 152 associated with the private blockchain 120. The spokesman 156 generates a digital signature of the data. In response, the data and the digital signature are posted to a public blockchain 104 associated with the private blockchain 120.

Private and Public Blockchains

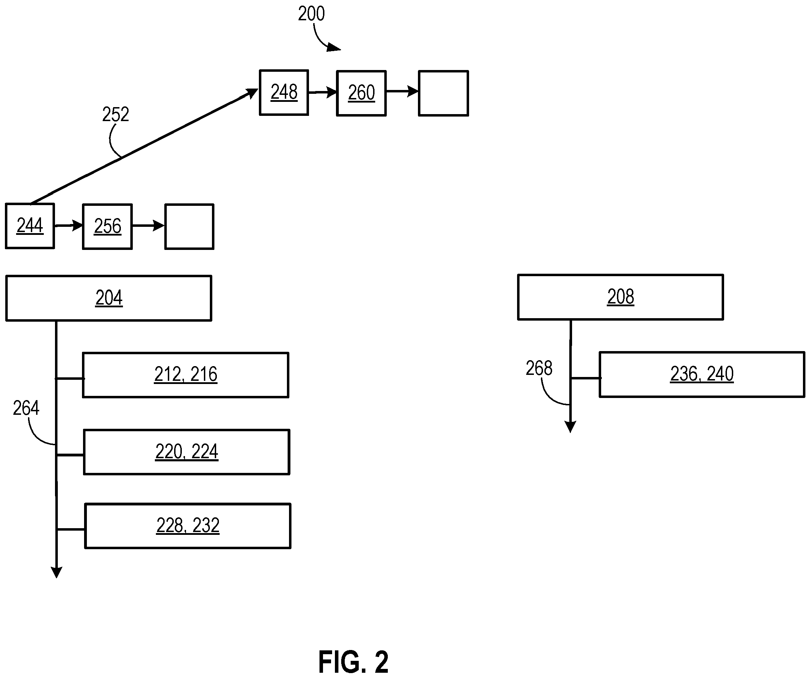

FIG. 2 shows an example use case of a payment network using multiple permissioned private co-chains 264, 268, in accordance with one or more implementations. Private and public blockchains play complementary roles. In a private (e.g., permissioned) co-chain 264, parties within a sub-community can transact among themselves without their identities and interactions becoming visible to outside parties. In a public (e.g., permissionless) blockchain 200, all parties can observe all transactions. For example, banks 204 and 208 can conduct internal transactions on their own private co-chains 264, 268 to enhance speed, to hide their activities from competitors, and to ease regulatory compliance.

Say, a party 212 at bank 264 wishes to trade assets 216 with a party 236 at bank 268. Because neither party wants to expose its private co-chain to the other, the parties 212, 236 move the assets 216, 240 to be traded from their own private co-chains 264, 268 to a common public blockchain 200, execute the trade on the blockchain 200, then their newly-acquired assets 240, 216 back to their respective private co-chains 264, 268. The entities 212, 220, 228 refer to users or account on the private co-chain 264. The entities 216, 234, 232 are assets. When the bank 204 creates a private transaction 244, it posts the commitment 252 on the public blockchain 200 by anonymizing the identity of the account 212. The public blockchain creates a block 248 to represent the transaction 244. Similarly, blocks 256, 260 are generated.

Executing trades by moving assets between private and public blockchains provides a swift and secure way to settle transactions between 204, 208. Moreover, such a trade does not compromise the parties' privacy, because neither party needs to learn the other's precise identity. In traditional financial systems, banks maintain private ledgers, and occasionally (at the end of the hour, day, or week) perform settlements between themselves. However, the traditional settlement layer is slow and expensive. For instance, it takes up to 3 days to settle transactions between bank ledgers. A global cross-chain payment network based on the implementations disclosed allows users to transact between private ledgers almost instantaneously and at low cost. The disclosed implementations allow parties 212, 236 at distinct private co-chains 264, 268 to swap assets 216, 240 in an efficient way without compromising privacy or security. Specifically, a collection of private co-chains 264, 268 use a common public blockchain 200 as a "neutral ground" for exchanges.

Communicably Coupled Co-Chains

In some implementations, co-chains execute a variant of Byzantine Fault-Tolerant (BFT) consensus. BFT protocols provide safety even when communication is asynchronous, and they ensure liveness when communication becomes synchronous for a sufficient time period. In BFT protocols, a set of validators 152 (Vset) approves every block of transactions. The validators 152 are illustrated and described in more detail with reference to FIG. 1. The validators 152 are identified by their public keys in the set VSet. In some implementations, non-fungible assets (e.g., the titles of cars, gift card identifiers, etc.) are used. In other implementations, the architecture supports fungible assets).

The co-chains according to the disclosed implementations have the following properties. First, co-chains (e.g., co-chain 120) produce commitments 128 to co-chain assets. The co-chain 120 and commitment 128 are illustrated and described in more detail with reference to FIG. 1. A co-chain 120 produces a cryptographic commitment 128 ($C_r$) of the entire balance table of the co-chain 120 (the mapping of all assets and their owners) at every block 124. This commitment 128 supports efficient proofs of membership and non-membership. Second, block certificates are generated. For each round r, the validators 152 confirm each block $B_r$ of transactions and produce a corresponding round certificate, $Cert_r$, and round commitment $C_r$. An entity can verify the tuple ($C_r$, $Cert_r$) given a previous block commitment with the associated certificate ($C_{r-1}$, $Cert_{r-1}$) and a verification algorithm (VerifyBlock) that is publicly known by participants in the network. For example, the verification algorithm might simply specify a threshold T (quorum) of the validators 152 that must approve the state transition.

Third, once a round certificate is created, transactions in the block are considered final and cannot be revoked or changed. Moreover, at any point in time, there exists only a single valid certificate, $Cert_r$, certifying a single commitment $C_r$ for any round r.

A private co-chain hence refers to a permissioned co-chain where a selected set of validators 152 (Vset) identified by their public keys, approves every block of transactions. The set of validators 152 can change, as long as a present set of validators 152 approves the changes. Similarly, anyone who wants to join the private co-chain needs to be approved by the present validators 152. All membership changes to the set of validators 152 or participants are recorded as special transactions on the blockchain. Private co-chains can deploy various network level visibility rules on the transactions and balances. For instance, the co-chain can be configured, such that only the validators 152 can view transactions and balances, or the identity of a participant. A public blockchain allows anyone to join the network without approvals. All transactions and users' balances are visible to anyone who joins the network. Subject to the consensus rules, any participant can become a validator 152 in the network.

Cryptographic Commitments

The commitment scheme used in the disclosed implementations has the following properties. First, Commit($E_1$, $E_N$) = C. The commit algorithm takes as input a collection of records (e.g., each record is a mapping between a public key and an asset). It outputs a short commitment to the entire set (e.g., 32 bytes). Second, Open($E_1$, ..., $E_N$, C, i) = $P_i$. The opening algorithm takes as input the collection of records with the corresponding commitment and an index i ≤ N. It outputs a succinct proof $P_i$ for the record $E_i$. Third, Verify(C, $E_i$, $P_i$, i) = 1. The verification algorithm takes as input a commitment and a record with the corresponding proof. It outputs 1 if and only if and only if $E_i$ was indeed committed at position i. Fourth, UpdateCommit(C, $P_i$, $E_i$, $E'_i$, i) = C'. The update commitment function takes as input a commitment, a record with a proof and a modified record. It outputs a new commitment C' that replaces record $E_i$ with $E'_i$ in position i.

The commitment schemes satisfies position binding and hiding properties. Position binding refers to the functionality that no adversary can produce a valid commitment C and two valid proofs for records $E_i$, $E'_i$ for the same position i. The hiding property refers to the functionality that given a commitment C and any number of openings with the corresponding proofs {$E_i$, $P_i$, i}, no information about the remaining unopened records is revealed.

Commitments to Self-Validating Transactions

In some implementations, self-validating transactions are constructed from efficient cryptographic commitments in an account-based co-chain. Suppose for each block r, co-chain validators 152 produce ($B_r$, $Cert_r$, $C_r$), where $C_r$ is a cryptographic commitment to the balances that specifies the entity that owns each asset. Suppose validators 152 only store $C_r$ after the round r is finalized. A user that wishes to instantiate a transaction T that affects its record $E_i$ in the balance table can run (or delegate to someone) Open($E_1$, ..., $E_N$, $C_r$, i) = $P_i$. The user propagates (T, $E_i$, $P_i$, i) to the network. Then, any validator 152 who holds $C_r$ for block r can verify T using the following five steps. First, check that Verify($C_r$, $E_i$, $P_i$, i) = 1. Second, check that T is valid according to the transaction logic. For example, the check should include that the transaction is signed under PK specified in $E_i$, and the transaction specifies a new public key PK*.

Third, all validators 152 update $E_i$ --> $E'_i$ to reflect the asset ownership transfer, as specified in T. Fourth, the validators 152 update the commitment UpdateCommit($C_r$, $P_i$, $E_i$, $E'_i$, i) = $C_{r+1}$ to reflect the change in the balance table. Fifth, the validators 152 agree on the updated commitment $C_{r+1}$ via the consensus protocol.

In this model, validators 152 are not required to store all balance entries. Instead, they only participate in the consensus and agree on the new commitment $C_{r+1}$ that reflects all transactions that are accepted in block $B_{r+1}$. This enables more efficient verification of transactions with fewer resources. For example, a single untrusted archival service can operate in the network that all users query to generate proofs of ownership. Such service is not trusted for safety, since by the security properties of the cryptographic commitments, it can only generated proofs for records that are included in the commitment.

Parties, Assets, and Transfers

In some implementations, the blockchain 104 is a publicly-readable, tamper-proof distributed ledger (or database) that tracks ownership of assets among various parties. The public blockchain 104 is illustrated and described in more detail with reference to FIG. 1. An asset can be fungible, such as a sum of money, or non-fungible, such as a theater ticket. A party refers to a person, an organization, or even a contract. Each co-chain 120, 140 manages its own ledger, enforces its own validation rules, and implements its own consensus mechanism. The co-chains 120, 140 are illustrated and described in more detail with reference to FIG. 1. Moreover, each co-chain 120, 140 can establish its own policies governing the visibility of its own transactions. For example, a policy might state that transactions are visible only to the co-chain's validators 152, or that they are visible to anyone.

In some implementations, co-chains 120 that track asset ownership and transactions that transfer asset ownership from one party to another are implemented. Value transfers are explicitly represented on the co-chain 120. A first domain of parties and a second domain of assets exist. Each asset is owned by a party. The predicate $\text{Owns}_X(P, a)$ is true if party P owns asset a on co-chain X. There exists a distinguished party N denoted as "nobody." Each asset is owned by one party on one co-chain (e.g., co-chain 120). In some implementations, each asset "a" is owned by a party $P \neq N$ on a co-chain X: $\text{Owns}_X(P, a)$, and owned by "nobody" (N) on each other co-chain $Y \neq X$: $\text{Owns}_Y(N, a)$.

An in-chain transfer refers to a state transition where party $P \neq N$ transfers an asset "a" to party Q on co-chain X. For example, the transfer can be represented as: Pre:

$$\text{Owns}_X(P, a) \text{ and } P \neq N \qquad (1)$$

Post:

$$\text{Owns}_X(Q, a) \qquad (2)$$

The pre-condition (1) states that P must own "a" on X and P must not be N. The post-condition (2) states that Q now owns "a" on X (and implicitly that P no longer owns "a"). If Q is N, then the asset "a" is no longer spendable on X.

A cross-chain transfer refers to a state transition where party P on co-chain X transfers an asset "a" to party Q on a distinct co-chain Y. The transfer can be represented as: Pre:

$$\text{Owns}_X(P, a) \text{ and } P \neq N \text{ and } X \neq Y \qquad (3)$$

Post:

$$\text{Owns}_X(N, a) \text{ and } \text{Owns}_Y(Q, a) \qquad (4)$$

The pre-condition (3) states that P must own "a" on X, P must not be N, and X and Y are distinct co-chains. The post-condition (4) states that Q now owns "a" on Y (and implicitly that P no longer owns "a" on X). P and Q can be distinct parties. A cross-chain transfer ensures that asset "a" is no longer spendable on co-chain X (because it is owned by N on X), and if the target $Q \neq N$, then "a" is now spendable on co-chain Y.

In some implementations, transactions on private co-chains 120, 140 are not visible to other co-chains, including the public blockchain 104. The public blockchain 104 tracks "balances" of assets for each co-chain 120, 140. A party that owns an asset on a co-chain 120 can transfer the asset from the co-chain 120 to the public blockchain 104, and vice-versa. Private co-chains 120, 140 exchange assets by (1) transferring those assets to the public blockchain 104, (2) swapping the assets on the public blockchain 104, and (3) transferring the newly-acquired assets back. If a co-chain 120 is "honest," then an asset transferred to the public blockchain 104 is no longer spendable on the co-chain 120. If the co-chain 120 is "dishonest," an asset can be double-spent on the co-chain 120, but it cannot be double-spent on the public blockchain 104, and as long as the asset resides on the public blockchain 104, its ownership is public.

In some implementations, each cross-chain transfer is between the public blockchain 104 and a private co-chain (e.g., co-chain 120), and not between private co-chains 120, 140. Each co-chain 120, 140 provides its own in-chain transfer protocol satisfying pre-condition (1) and post-condition (2). A common cross-chain transfer protocol satisfies pre-condition (3) and post-condition (4). A co-chain X is referred to as "dishonest" if its in-chain transfer protocol does not satisfy pre-condition (1) and post-condition (2), implying that more than one party can own the same asset on X, a property known as double spending.

In some implementations, there is one public blockchain 104, which is honest, and many private co-chains 120, 140, some of which can be dishonest. The cross-chain transfer protocol provides the following no cross-chain double spending property: if "a" is an asset and X and Y honest co-chains (public or private), then if "a" is owned by P on X and Q on Y, then P or Q is N. In some implementations, no information about the co-chain 120 (i.e., which entity owns which asset) is revealed to the public, except the information that is explicitly specified in the transfer from a private co-chain X to the public blockchain Y. More formally, this is captured by a simulation experiment. In the real world, the adversary receives messages (in the form of transactions) that are posted from co-chain X to co-chain Y.

For example, $(\alpha, \{Q : a\})$ denotes the real view of the adversary from observing the public blockchain Y, where $\{Q : a\}$ captures a set of all transfers of assets "a" to parties Q. In the simulated world, $\alpha_S$ is produced by a polynomial time simulator with no knowledge of the information about co-chain X. Further, $\{R : a\}s$ denotes the set of transfers where each party identifier R is randomly chosen from the set of all possible identifiers. The following two distributions are computationally indistinguishable: $(\alpha, \{Q : a\}) \sim_c (\alpha_S, \{R : a\}s)$. This provides the following three functions. First, when P at private co-chain X transfers "a" to Q at public blockchain Y, it is expected that P and Q represent the same person or belong to the same organization. Nevertheless, there should be no way to link the two parties: someone observing the transactions on the public blockchain Y can be able to tell that the asset was transferred from X, but cannot identify who owned that asset on X.

Second, if P transfers first "a" then "a'", an observer cannot link the two transfers to the same previous owner. Third, similar constraints hold for transfer from public to private co-chains: if Q transfers "a" to R on private co-chain Z, then an observer cannot identify R, and if two parties transfer "a" then "a'" to R at Z, then the two transfers cannot be identified as going to the same recipient.

Private Co-Chain Implementation

In some implementations, a public blockchain 104 is a permissionless network that any entity can join and participate in. Any entity can write and read from the public blockchain 104, subject to paying transaction fees, if necessary. Each co-chain 120, 140 first goes through an "on-boarding" phase to register. The private co-chains 120, 140 are permissioned networks, with explicitly defined validators 152 and block verification algorithms. The initialization phase includes steps such as asset registration, private co-chain registration, and initial asset distribution. The order of these steps can vary.

Each co-chain 120, 140 registers with the public blockchain 104 if it wishes to transfer assets between them. A special transaction can be issued on the public blockchain 104 that includes a set of validator public keys, VSet = $(VPK_1, VPK_2, ..., VPKrr)$. The registration transaction also includes a description of an algorithm VerifyBlock that inputs $(Cert_{r-1}, C_{r-1}, Cert_r, C_r)$ and outputs "valid/invalid." That is, given a block commitment for rounds r - 1, r with the corresponding certificate, the algorithm accepts if and only if $C_r$ is a valid commitment of assets after round r. After the registration transaction is accepted, the public blockchain 104 returns a unique identifier PriID.

Each asset class is registered on the public blockchain 104. The registrar can specify the total asset supply, the initial assignment of the asset owners, or how new assets are "minted." Each asset class receives a unique identifier AssetClassID. For simplicity, all assets are recorded in "records" $(E_1, ..., E_N)$. Each record is uniquely identified by an index i. The record can include information about the current asset owner and any additional auxiliary information. After the initialization, a public lookup function FindAsset on the public blockchain 104 inputs (AssetClassID, index i) and returns a tuple (ChainID, j) that specifies the current co-chain owner ChainID, and a monotonically increasing sequence number j for the asset (which will be used to prevent double spending attacks later).

Each co-chain 120, 140 executes its own consensus algorithm, running at independent speed. For each round r, the co-chain validators 152 produce a tuple $(B_r, Cert_r, C_r)$, where $C_r$ is a commitment to the balance table of the asset holders. In some implementations, the private co-chain validators 152, indexed by PriID, produce a tuple $(B_r, Cert_r, C_r)$. A special transaction is instantiated (by the validators 152 or other member of the co-chain 120) that includes (ChainID, Cr, Certr). This transaction is submitted to the public blockchain 104. Anyone can post this tuple on the public blockchain 104. This party is not trusted for safely, but it is trusted for liveness. If the co-chain 120 runs faster than the public blockchain 104 (e.g., the co-chain 120 generates multiple blocks of transactions for every one block produced on the public blockchain 104), then a collection of commitments with the corresponding certificates ChainID : $(C_r, Cert_r, C_{r+1}, Cert_{r+1}, ...)$ can be posted simultaneously to the public blockchain 104. The public blockchain 104 accepts such transactions only if for all rounds r: VerifyBlock($Cr_{-1}$, $Cert_{r-1}$, $C_r$, $Cert_r$) = 1. The public blockchain 104 thus verifies that there exists a valid set of validators 152 that approved every block. Note that by itself, neither the certificate nor the commitment to the co-chain assets reveals any information about the individual asset owners.

Cross-Chain Transfers

The entities PrivCoChain (with identifier PriID) and PubCoChain denote two co-chains. In some implementations, an asset is moved from an asset class AssetClassID from a co-chain 120, 140 to the public blockchain 104 (and in reverse). The implementations disclosed preserve the privacy properties of the private co-chain and anonymity properties of its users. In some implementations, a user with a public key PK who owns asset "i" from AssetClassID wants to transfer the asset to the public blockchain 104. The following steps are taken. First, the user creates a fresh key-pair (PK*, SK*). Second, the user submits a special transaction on the co-chain 120 that puts the asset in a "withdrawal" account and assigns PK* as the owner. The account also includes a unique sequence j' that is greater than the last sequence number j of this asset, which can be obtained via a look-up on the public blockchain 104 (AssetClassID, i). The entire account state is recorded in a new record $E'_i$. The user sends the transaction thereby changing the state of asset "i" to $E'_i$. Once the asset is transferred to this state, it is not be transacted on the co-chain 120, and remains locked.

Third, the transaction is accepted by the private co-chain validators 152 in round r that produces ($B_r$, $Cert_r$, $C_r$). The tuple (ChainID, $Cert_r$, $C_r$) is posted via a transaction on the public blockchain 104. Fourth, the user obtains a proof $P_i$ with respect to $C_r$ that she indeed put the asset $E'_i$ in the withdrawal state under key PK*. Fifth, the user presents the tuple (Pi, $E'_i$, i) to the public blockchain 104 via a special transaction. Sixth, the public blockchain 104 accepts the transaction if the following three conditions hold:

(a) Verify($C_r$, $E'_i$, $P_i$, i) = 1.
(b) $E'_i$ is in the "withdrawal" state from the co-chain 120.
(c) Look-up (ChainID, j) based on the asset (AssetClassID, i). Validate that ChainID matches the co-chain 120 from which the withdrawal was submitted, and the last sequence number j is less than the sequence number j' specified in $E'_i$.

Seventh, if the checks pass, the public blockchain 104 creates the asset, removes it from the co-chain 120, and assigns the new owner the asset:

(a) The mapping from (AssetClassID, i) is updated to include public blockchain ID, and the sequence number is set to j' (the sequence specified in the withdrawal).
(b) User PK* is then assigned as the owner of asset "i" on the public blockchain 104.

Security Analysis

To achieve privacy (anonymity) of users engaging in cross-chain payments, each user U1 and U2 creates one-time keys to which they transfer assets on the private co-chains 120, 140. Subsequently, the users engage in cross-chain payments using these one-time keys. The one-time keys anonymize the cumulative assets of users U1 and U2 on the respective co-chains 120, 140. In some implementations, the individual mappings between users and their assets within a co-chain 120 remain private. The public blockchain 104 sees: (A) commitments and validator certificates to individual co-chain balance tables, (B) transactions between a co-chain 120 and the public blockchain 104, and (C) self-authenticated records. Co-chain privacy is provided because (B) does not reveal any information about the users or assets within the co-chain 120 since the user creates a one-time key pair for each cross-chain transaction. (A) and (C) do not reveal any information about the co-chain 120 from cryptographically hiding commitments; the validators 152 sign only the commitment.

For a co-chain 120 to meet its regulatory obligations, regulatory obligations are removed from the public blockchain 104 and moved to the private co-chains 120, 140. Each bank can maintain a co-chain 120 and stay responsible for satisfying its regulators, given its jurisdictions. During a transfer between a co-chain 120 and the public blockchain 104, both the user and the co-chain administrators or validators 152 sign each transaction. The co-chain administrators or validators 152 can run a policy to ensure that the transfer should be authorized. The regulators can further query private co-chains administratorss. Additionally, encryption tools (e.g., Attribute-Based Encryption) can be used, if needed, on transfers. That is, each transaction from a co-chain 120 to the public blockchain 104 can include encryption of auxiliary information that only the regulators can inspect. For example, a co-chain 120 administered by a bank can generate a key pair (PK, SK), and issue different regulators keys $SK_{P1}$, ..., $SK_{Pn}$ that specify the policies $P_1$, ..., $P_n$ under which the regulators are allowed to inspect transfers. Each transaction is associated with a set of attributes (e.g., date, type of transaction, type of sender, etc.) and encrypted auxiliary information for regulators (e.g., transfer authorization materials).

Given the transaction and secret key for a policy SKP "i", a regulator can inspect the encrypted content in the transaction.

Example Process Using Co-Chains

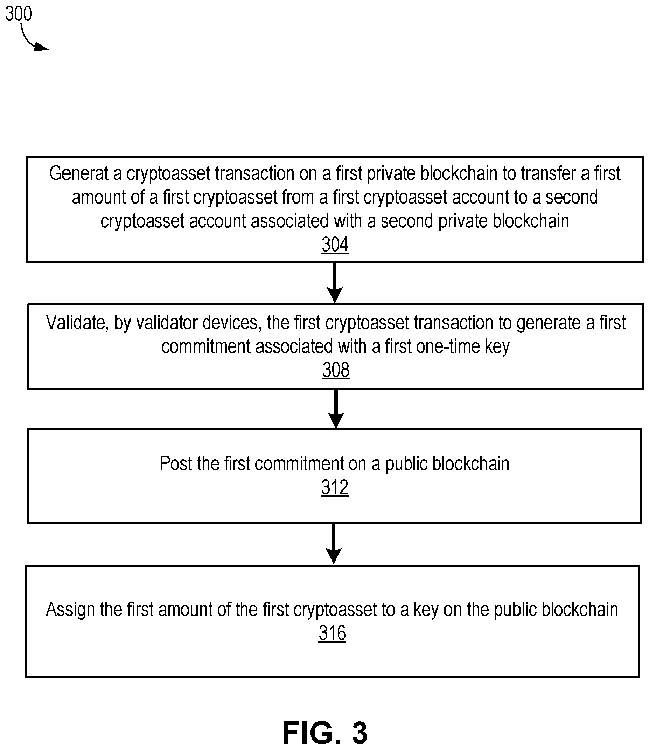

FIG. 3 shows an example process 300 using co-chains. In some implementations, the process of FIG. 3 is performed by the payment network illustrated and described in more detail with reference to FIG. 1. Other entities perform some or all of the steps of the process in other implementations. Likewise, implementations can include different and/or additional steps, or perform the steps in different orders.

A user device of a first private blockchain (e.g., the co-chain 120) of the payment network instantiates (304) a cryptoasset transaction on the first co-chain 120. The co-chain 120 is illustrated and described in more detail with reference to FIG.1. The user device can be a smartphone, tablet, laptop, etc. The cryptoasset transaction is to transfer a first amount of a first cryptoasset from a first cryptoasset account 124 to a second cryptoasset account 136 associated with a second private co-chain (e.g., the co-chain 140). The co-chain 140 is illustrated and described in more detail with reference to FIG.1. The cryptoasset transaction is reflected in a block (e.g., block 124) of the co-chain 120. The block 124 is illustrated and described in more detail with reference to FIG.1.

A set of validators 152 of the first co-chain 120 validate (308) the first cryptoasset transaction to generate a first commitment (e.g., commitment 128) associated with a first one-time key 144. The validators 152 and commitment 128 are illustrated and described in more detail with reference to FIG.1. The validators 152 of the co-chain 120 receive a validation request associated with the cryptoasset transaction. The first computer device (of co-chain 120) can register the validators 152 on the public blockchain 104. The public blockchain 104 is illustrated and described in more detail with reference to FIG.1. Each validator 152 has a different public key for validating cryptoasset transactions.

A first computer device associated with the first co-chain 120 posts (312) the first commitment on a public blockchain (e.g., the blockchain 104). The first computer device is an administrator device of the first co-chain 120. For example, each entry in a balance table is denoted by $E_i$. The private co-chain validators 152 produce a commitment: Chain_1_Commit_Round_R on the collection of entries $E_1, ..., E_N$. At the end of the round, the co-chain validators 152 produce a certificate Chain_1_Cert_Round_R authorizing the commitment Chain_1_Commit_Round_R.

A second computer device associated with the public blockchain 104 assigns (316) the first amount of the first cryptoasset to the first one-time key 144 on the public blockchain 104. The second computer device is an administrator device of the blockchain 104. For example, the blockchain 104 can store the assignment in a balance table entry. For each round, the validators 152 of the co-chain 120 reach an agreement on the balance table of assets. The block 124 produced by the co-chain 120 thus includes the commitment 128 to the balance table entries. The second computer device removes the first amount of the first cryptoasset from a balance table of the co-chain 120 to reflect that the first amount of the first cryptoasset is being transferred.

Example Process for Transferring an Asset Using Co-Chains

FIG. 4 shows an example process 400 for transferring an asset using a co-chain. In this example process, a blockchain system has a main chain (e.g., public blockchain), a co-chain, wherein the co-chain has a corresponding account on the main chain, an asset owned by the corresponding account on the main chain and owned by an account on the co-chain, and a co-chain account possessing the asset. An authenticated transaction is posted (402) on the co-chain. For example, the transaction is issued by a member of the co-chain and included in a block of the co-chain. The authenticated transaction authorizes a transfer of the asset from the co-chain account to the main chain. Validators of the co-chain authenticate (404) a data string specifying the asset to be transferred and a destination public key. The authenticated data string is delivered (406) to the account of the main chain corresponding to the co-chain. A transaction is posted (406) to the main chain. The transaction transfers the asset to the destination public key from the account of the main chain corresponding to the co-chain.

In some implementations, validators of the co-chain produce partial signatures usable to compute a digital signature based on a destination public key, such that the digital signature is usable to authenticate the transfer of the asset to the account of the main chain. Further, in some implementations, the digital signature is posted on the main chain.

In some implementations, it is determined that the authenticated transaction is posted on the co-chain before the transaction assigning the asset to the account of the main chain is posted to the main chain.

In some implementations, the account of the main chain corresponding to the co-chain is controlled by an entity that controls an account on the co-chain.

Example Techniques

In an example technique, an entity (e.g., an organization or government entity) establishes a private co-chain (e.g., one of the private co-chains 120, 140 shown in FIG. 1) on which it conducts its internal business. A token bridge enables certain non-fungible assets to be transferred between a public blockchain (e.g., the public blockchain 104 shown in FIG. 1), sometimes referred to as a "main chain," and the co-chain 120. Only certain parties (e.g., parties associated with respective public keys) on the co-chain 120 are authorized to transfer to the main chain 104, and only certain parties on the main chain 104 are authorized to transfer back to the co-chain 120.

In an example scenario, an entity who holds title to property on the co-chain 120 decides to auction that property on the main chain 104. First, the entity instructs the co-chain 120 to transfer the entity's title to the main chain 104 along with instructions to a main-chain agent to auction the property and repatriate the proceeds to the co-chain 120. After that transaction is validated and appears on the co-chain 120, the transaction is sent to the main chain 104 where it is identified and accepted by the agent. As part of this cross-chain transfer, the co-chain validators 152 check that the owner is authorized to perform cross-chain transfers, that her main-chain agent is authorized to receive such transfers, and that the transfer and accompanying instructions were validated by a correct subset of validators 152.

### Merkle Trees in Blocks

A co-chain 120, 140 is capable of demonstrating to the main chain 104 that certain transactions took place. In some implementations, the co-chain blocks organize transactions in a Merkle tree searchable by account, so that the co-chain 120 can prove that a transaction exists on the co-chain 120, and that the transaction is authorized by one of the public keys authorized to transfer assets to the main chain 104. In this way, the main chain 104 can receive (1) a Merkle commitment to the transaction, including instructions to the main chain agent, and (2) a certificate signed by a quorum of current co-chain validators 152.

In some examples, the owner of the asset on the co-chain 120 pays fees to transfer the title to the main chain 104, to conduct the auction, and to transfer the proceeds back. For example, the owner can pay a retainer to her main-chain agent.

### Instruction Fields for Cross-chain Transactions

In some examples, a cross-chain asset transfer can be accompanied by instructions for asset disposal on the main chain 104. For example, these instructions can be scripts (e.g., Transaction Execution Approval Language scripts), smart contract calls, or notarized English text. To this end, in some implementations, the co-chain block's Merkle tree of transactions includes an instructions field in a manner flexible enough to accommodate any reasonable form of instructions.

### Summary Merkelized Data Structures

In some examples, a co-chain 120, 140 is capable of producing compact, tamper-proof digests of the following four items. First, the list of assets that can currently be exchanged with the main chain 104 (e.g., the list can be a regulatory requirement). Second, public keys of parties currently authorized to perform cross-chain transfers from the co-chain to the main chain. Third, the current set of co-chain validators 152. Fourth, the current list of spokesmen. The lists can change and require updates. For example, they can be endorsed by a quorum of co-chain validators 152 to ensure validity. In some implementations, these lists can be organized as searchable Merkle trees, or they could be unstructured arrays, depending on whether they should be transmitted partially or completely.

### Transfer Cadence

In some examples, there are several policy options for how often to transfer assets between blockchains. One option is to do the transfers periodically, e.g., every one thousand blocks. Another is to transfer on demand. A mix of strategies is possible, e.g., offering a premium service for parties will to pay for timely response, and a basic economy service for those who wish to economize on fees in return for slower turnaround.

### Spokesmen

In some implementations, various data structures and messages sent from the co-chain 120, 140 to the main chain 104 are certified by a quorum of co-chain validators 152. To reduce the size of such certifications, the co-chain validators 152 can nominate and certify one or more "spokesmen" (sometimes referred to as "spokeskeys") to certify data on behalf of the validators 152. The validators 152 can change the spokesman 156, either on a regular basis or in response to perceived misbehavior. A spokesman 156 can, in particular, report the following data. First, Merkelized data structures 1 and 2. Second, assets that are to be transferred to the main chain 104 (including the instruction for use and the trading keys that must handle the assets in the main chain 104).

This technique can ensure that the proper information of a co-chain block (e.g., that included in every 10th or 100th block) is succinctly and efficiently communicated to the main chain 104. In some examples, a co-chain spokesman 156 is not authorized to change the set of validators 152 (e.g., ensuring it cannot launch a "coup," such as maliciously changing the validators 152 to benefit the spokesman 156) or the set of prior and a newly-appointed spokesman 156.

In some implementations, digitally signed data of the co-chain spokesmen are posted on the main chain 104, but the co-chain 120 does not act on it (e.g., does not sell or atomically swap an asset transferred to the main chain 104) for a given number of blocks (e.g., twenty blocks) to ensure that validators 152 do not object. In some examples, the co-chain validators 152 can monitor the main chain 104 and, if one of them realizes that a spokesman 156 posts incorrect information, will counter-post the correct one (e.g., certified by the proper majority of the co-chain validators 152). Steps can be taken to prevent multiple postings of equivalent validator-certified information.

Thus, because it is more efficient to post elements (e.g., transactions, assets, information, etc.) on the main chain 104 that are digitally signed by a single key 144 (e.g., on behalf of the entire co-chain 120), elements need not be digitally signed by multiple validators 152. Instead, an element signed by a spokesman 156 can be challenged within a given amount of time or a given number of blocks, nullifying the transfer of the spokesman 156. In this way, these techniques enable centralized action and distributed rectification.

Example Implementation of a Payment Network Including Private Permissioned Blockchains

FIG. 5 is a block diagram illustrating a computer system 500, in accordance with one or more implementations. In an implementation, the computer system 500 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques or can include one or more general purpose hardware processors programmed to perform the techniques pursuant to program instructions in firmware, memory, other storage, or a combination. Such special-purpose computing devices can also combine custom hard-wired logic, ASICs, or FPGAs with custom programming to accomplish the techniques. In various implementations, the special-purpose computing devices are desktop computer systems, portable computer systems, handheld devices, network devices or any other device that incorporates hard-wired and/or program logic to implement the techniques.

In some implementations, the computer system 500 includes a bus 502 or other communication mechanism for communicating information, and a hardware processor 504 coupled with a bus 502 for processing information. The hardware processor 504 is, for example, a general-purpose microprocessor. The computer system 500 also includes a main memory 506, such as a random-access memory (RAM) or other dynamic storage device, coupled to the bus 502 for storing information and instructions to be executed by processor 504. In one implementation, the main memory 506 is used for storing temporary variables or other intermediate information during execution of instructions to be executed by the processor 504. Such instructions, when stored in non-transitory storage media accessible to the processor 504, render the computer system 500 into a special-purpose machine that is customized to perform the operations specified in the instructions.

In some implementations, the computer system 500 further includes a read only memory (ROM) 508 or other static storage device coupled to the bus 502 for storing static information and instructions for the processor 504. A storage device 510, such as a magnetic disk, optical disk, solid-state drive, or three-dimensional cross point memory is provided and coupled to the bus 502 for storing information and instructions.

In some implementations, the computer system 500 is coupled via the bus 502 to a display 512, such as a cathode ray tube (CRT), a liquid crystal display (LCD), plasma display, light emitting diode (LED) display, or an organic light emitting diode (OLED) display for displaying information to a computer user. An input device 514, including alphanumeric and other keys, is coupled to bus 502 for communicating information and command selections to the processor 504. Another type of user input device is a cursor controller 516, such as a mouse, a trackball, a touch-enabled display, or cursor direction keys for communicating direction information and command selections to the processor 504 and for controlling cursor movement on the display 512. This input device typically has two degrees of freedom in two axes, a first axis (e.g., x-axis) and a second axis (e.g., y-axis), that allows the device to specify positions in a plane.

According to some implementations, the techniques herein are performed by the computer system 500 in response to the processor 504 executing one or more sequences of one or more instructions contained in the main memory 506. Such instructions are read into the main memory 506 from another storage medium, such as the storage device 510. Execution of the sequences of instructions contained in the main memory 506 causes the processor 504 to perform the process steps described herein. In alternative implementations, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 510. Volatile media includes dynamic memory, such as the main memory 506. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but can be used in conjunction with transmission media. Transmission media participates in transferring information between storage media. For example, transmission media includes coaxial cables, copper wire and fiber optics, including the wires that include the bus 502. Transmission media can also take the form of acoustic or light waves, such as those generated during radio-wave and infrared data communications.

In some implementations, various forms of media are involved in carrying one or more sequences of one or more instructions to the processor 504 for execution. For example, the instructions are initially carried on a magnetic disk or solid-state drive of a remote computer. The remote computer loads the instructions into its dynamic memory and send the instructions over a telephone line using a modem. A modem local to the computer system 500 receives the data on the telephone line and use an infrared transmitter to convert the data to an infrared signal. An infrared detector receives the data carried in the infrared signal and appropriate circuitry places the data on the bus 502. The bus 502 carries the data to the main memory 506, from which processor 504 retrieves and executes the instructions. The instructions received by the main memory 506 can optionally be stored on the storage device 510 either before or after execution by processor 504.

The computer system 500 also includes a communication interface 518 coupled to the bus 502. The communication interface 518 provides a two-way data communication coupling to a network link 520 that is connected to a local network 522. For example, the communication interface 518 is an integrated service digital network (ISDN) card, cable modem, satellite modem, or a modem to provide a data communication connection to a corresponding type of telephone line. As another example, the communication interface 518 is a local area network (LAN) card to provide a data communication connection to a compatible LAN. In some implementations, wireless links are also implemented. In any such implementation, the communication interface 518 sends and receives electrical, electromagnetic, or optical signals that carry digital data streams representing various types of information.

The network link 520 typically provides data communication through one or more networks to other data devices. For example, the network link 520 provides a connection through the local network 522 to a host computer 524 or to a cloud data center or equipment operated by an Internet Service Provider (ISP) 526. The ISP 526 in turn provides data communication services through the world-wide packet data communication network now commonly referred to as the "Internet" 528. The local network 522 and Internet 528 both use electrical, electromagnetic, or optical signals that carry digital data streams. The signals through the various networks and the signals on the network link 520 and through the communication interface 518, which carry the digital data to and from the computer system 500, are example forms of transmission media. In some implementations, the network 520 contains a cloud network or server, or a part of a cloud.

The computer system 500 sends messages and receives data, including program code, through the network(s), the network link 520, and the communication interface 518. In some implementations, the computer system 500 receives code for processing. The received code is executed by the processor 504 as it is received, and/or stored in storage device 510, or other non-volatile storage for later execution.

In the description here, for the purposes of explanation, numerous specific details are set forth in order to provide a thorough understanding of the disclosed implementations. It will be apparent, however, that the implementations can be practiced without these specific details. In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all implementations or that the features represented by such element cannot be included in or combined with other elements in some implementations.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as can be needed, to affect the communication.

Reference will now be made in detail to implementations, examples of which are illustrated in the accompanying drawings. In the following detailed description, numerous specific details are set forth in order to provide a thorough understanding of the various described implementations. However, it will be apparent to one of ordinary skill in the art that the various described implementations can be practiced without these specific details. Although headings are provided, information related to a particular heading, but not found in the section having that heading, can also be found elsewhere in this description.

Although the subject matter has been described in language specific to structural features and/or acts, it is to be understood that the subject matter defined in the appended claims is not necessarily limited to the specific features or acts described. Rather, the specific features and acts described are disclosed as examples of implementing the claims and other equivalent features and acts are intended to be within the scope of the claims. In the foregoing description, implementations have been described with reference to numerous specific details that can vary from implementation to implementation. The description and drawings are, accordingly, to be regarded in an illustrative rather than a restrictive sense. The sole and exclusive indicator of the scope of the implementations, and what is intended by the applicants to be the scope of the implementations, is the literal and equivalent scope of the set of claims that issue from this application, in the specific form in which such claims issue, including any subsequent correction. Any definitions expressly set forth herein for terms contained in such claims shall govern the meaning of such terms as used in the claims. In addition, when we use the term "further including," in the foregoing description or following claims, what follows this phrase can be an additional step or entity, or a sub-step/sub-entity of a previously-recited step or entity.

## Claims

1. A method of enabling one or more entities of a blockchain system to carry out a series of operations, wherein the blockchain system comprises

    a main chain,
    a co-chain, wherein the co-chain has a corresponding account on the main chain,
    an asset owned by the corresponding account on the main chain and owned by an account on the co-chain, and the co-chain account possessing the asset,
    the operations comprising:

    posting (402) an authenticated transaction on the co-chain, the authenticated transaction authorizing a transfer of the asset from the co-chain account to the main chain;
    authenticating (404), by validators (152) of the co-chain, a data string specifying the asset to be transferred and a destination public key (144);
    delivering (406) the authenticated data string to the account of the main chain corresponding to the co-chain for indicating that the asset should be transferred to the destination public key; and
    posting, on the main chain, a transaction transferring the asset to the destination public key from the account of the main chain corresponding to the co-chain.

2. The method of claim 1, the operations comprising generating the public key.

3. The method of claim 1, wherein the validators (152) authenticate the data string using a digital signature of a threshold signature scheme.

4. The method of claim 3, wherein the digital signature is generated relative to a public key that is associated with the account in the main chain, wherein a corresponding secret key is collectively held by the validators of the co-chain.

5. The method of claim 1, wherein the account of the main chain corresponding to the co-chain is controlled by an entity that controls the account on the co-chain.

6. A method of enabling one or more entities of a blockchain system to carry out a series of operations, wherein the blockchain system comprises

    a main chain (104),
    a co-chain (120, 140), wherein the co-chain has a corresponding account on the main chain,
    an asset owned by the corresponding account on the main chain and owned by an account on the co-chain wherein the co-chain account possesses the asset,
    the operations comprising:

    posting (402) an authenticated transaction on the co-chain, the authenticated transaction authorizing a transfer of the asset from the co-chain account to another account of the main chain;
determining that the authenticated transaction is posted on the co-chain; and
posting (406), on the main chain, a transaction assigning the asset to the other account of the main chain.

**7.** The method of claim 6, the operations comprising generating a public key (144).

**8.** The method of claim 6, wherein validators authenticate a data string using a digital signature of a threshold signature scheme.

**9.** The method of claim 8, wherein the digital signature is generated relative to a public key that is associated with the account of the main chain, wherein a corresponding secret key is collectively held by the validators of the co-chain.

**10.** The method of claim 6, wherein the account of the main chain corresponding to the co-chain is controlled by an entity that controls the account on the co-chain.

**11.** The method of claim 6, ,
the operations comprising:

producing, by validators of the co-chain, partial signatures usable to compute a digital signature based on a destination public key, the digital signature usable to authenticate the transfer of the asset to the account of the main chain; and
posting the digital signature on the main chain for authorizing the transfer of the asset to the public key on the main chain.

**12.** A system comprising:

one or more computer processors; and
one or more non-transitory storage media storing instructions which, when executed by
the one or more computer processors, cause performance of a method recited in any one of claims 1-10.

**13.** One or more non-transitory storage media storing instructions which, when executed by one or more computing devices, cause performance of a method recited in any one of claims 1-11.

**Patentansprüche**

**1.** Verfahren zum Ermöglichen einer oder mehreren Einheiten eines Blockchain-Systems, eine Reihe von Vorgängen auszuführen, wobei das Blockchain-System Folgendes umfasst:

eine Hauptkette,
eine Co-Kette, wobei die Co-Kette ein entsprechendes Konto auf der Hauptkette aufweist,
einen Vermögenswert, der dem entsprechenden Konto in der Hauptkette und einem Konto in der Co-Kette gehört, und
ein Co-Kette-Konto, das den Vermögenswert besitzt,
wobei die Vorgänge Folgendes umfassen:

Buchen (402) einer authentifizierten Transaktion auf der Co-Kette, wobei die authentifizierte Transaktion eine Übertragung des Vermögenswerts vom Co-Kette-Konto auf die Hauptkette autorisiert;
Authentifizieren (404) einer Datenzeichenfolge, die den zu übertragenden Vermögenswert und einen öffentlichen Zielschlüssel (144) angibt, durch Validatoren (152) der Co-Kette;
Übermitteln (406) der authentifizierten Datenzeichenfolge an das Konto der Hauptkette, die der Co-Kette entspricht, um anzugeben, dass der Vermögenswert auf den öffentlichen Zielschlüssel übertragen werden soll; und
Buchen einer Transaktion auf der Hauptkette, bei der der Vermögenswert vom Konto der Hauptkette, das der Co-Kette entspricht, auf den öffentlichen Zielschlüssel übertragen wird.

**2.** Verfahren nach Anspruch 1, wobei die Vorgänge das Erzeugen des öffentlichen Schlüssels umfassen.

**3.** Verfahren nach Anspruch 1, wobei die Validatoren (152) die Datenzeichenfolge unter Verwendung einer digitalen Signatur eines Schwellenwertsignaturschemas authentifizieren.

**4.** Verfahren nach Anspruch 3, wobei die digitale Signatur relativ zu einem öffentlichen Schlüssel erzeugt wird, der dem Konto in der Hauptkette zugeordnet ist, wobei ein entsprechender geheimer Schlüssel gemeinsam von den Validatoren der Co-Kette gehalten wird.

**5.** Verfahren nach Anspruch 1, wobei das Konto der Hauptkette, das der Co-Kette entspricht, von einer Entität kontrolliert wird, die das Konto auf der Co-Kette kontrolliert.

**6.** Verfahren zum Ermöglichen einer oder mehreren Einheiten eines Blockchain-Systems, eine Reihe von Vorgängen auszuführen, wobei das Blockchain-System Folgendes umfasst:

eine Hauptkette (104),
eine Co-Kette (120, 140), wobei die Co-Kette ein entsprechendes Konto auf der Hauptkette aufweist,
ein Vermögenswert, der dem entsprechenden Konto in der Hauptkette gehört und einem Konto in der Co-Kette gehört, wobei das Co-Kette-Konto den Vermögenswert besitzt,
wobei die Vorgänge Folgendes umfassen:

Buchen (402) einer authentifizierten Transaktion auf der Co-Kette, wobei die authentifizierte Transaktion eine Übertragung des Vermögenswerts vom Co-Kette-Konto auf ein anderes Konto der Hauptkette autorisiert;
Bestimmen, dass die authentifizierte Transaktion in der Co-Kette veröffentlicht wird; und
Buchen (406) einer Transaktion, bei der der Vermögenswert dem anderen Konto der Hauptkette zugewiesen wird, auf der Hauptkette.

**7.** Verfahren nach Anspruch 6, wobei die Vorgänge das Erzeugen eines öffentlichen Schlüssels (144) umfassen.

**8.** Verfahren nach Anspruch 6, wobei Validatoren eine Datenzeichenfolge mithilfe einer digitalen Signatur eines Schwellenwertsignaturschemas authentifizieren.

**9.** Verfahren nach Anspruch 8, wobei die digitale Signatur relativ zu einem öffentlichen Schlüssel erzeugt wird, der dem Konto der Hauptkette zugeordnet ist, wobei ein entsprechender geheimer Schlüssel gemeinsam von den Validatoren der Co-Kette gehalten wird.

**10.** Verfahren nach Anspruch 6, wobei das Konto der Hauptkette, das der Co-Kette entspricht, von einer Entität kontrolliert wird, die das Konto auf der Co-Kette kontrolliert.

**11.** Verfahren nach Anspruch 6,
wobei die Vorgänge Folgendes umfassen:

Erzeugen von Teilsignaturen durch Validatoren der Co-Kette, die zur Berechnung einer digitalen Signatur auf der Grundlage eines öffentlichen Zielschlüssels verwendet werden können, wobei die digitale Signatur zur Authentifizierung der Übertragung des Vermögenswerts auf das Konto der Hauptkette verwendet werden kann; und
Buchen der digitalen Signatur auf der Hauptkette, um die Übertragung des Vermögenswerts auf den öffentlichen Schlüssel auf der Hauptkette zu autorisieren.

**12.** System, umfassend:

ein oder mehrere Computerprozessoren; und
ein oder mehrere nichtflüchtige Speichermedien, die Anweisungen speichern, die, wenn sie von einem oder mehreren Computerprozessoren ausgeführt werden, die Ausführung eines in einem der Ansprüche 1 bis 10 genannten Verfahrens bewirken.

**13.** Ein oder mehrere nichtflüchtige Speichermedien, die Anweisungen speichern, die, wenn sie von einem oder mehreren Computergeräten ausgeführt werden, die Ausführung eines Verfahrens nach einem der Ansprüche 1 bis 11 bewirken.

**Revendications**

1. Procédé permettant à une ou plusieurs entités d'un système de chaîne de blocs d'effectuer une série d'opérations, dans lequel le système de chaîne de blocs comprend

   une chaîne principale,
   une co-chaîne, dans lequel la co-chaîne a un compte correspondant sur la chaîne principale,
   un actif détenu par le compte correspondant sur la chaîne principale et détenu par un compte sur la co-chaîne, et
   un compte de co-chaîne possédant l'actif,
   les opérations comprenant :

   la publication (402) d'une transaction authentifiée sur la co-chaîne, la transaction authentifiée autorisant un transfert de l'actif du compte de co-chaîne vers la chaîne principale ;
   l'authentification (404), par des validateurs (152) de la co-chaîne, d'une chaîne de données spécifiant l'actif à transférer et une clé publique de destination (144) ;
   la transmission (406) de la chaîne de données authentifiée au compte de la chaîne principale correspondant à la co-chaîne pour l'indication du fait que l'actif doit être transféré vers la clé publique de destination ; et
   la publication, sur la chaîne principale, d'une transaction transférant l'actif vers la clé publique de destination à partir du compte de la chaîne principale correspondant à la co-chaîne.

2. Procédé selon la revendication 1, les opérations comprenant la génération de la clé publique.

3. Procédé selon la revendication 1, dans lequel les validateurs (152) authentifient la chaîne de données en utilisant une signature numérique d'un schéma de signature à seuil.

4. Procédé selon la revendication 3, dans lequel la signature numérique est générée par rapport à une clé publique qui est associée au compte dans la chaîne principale, dans lequel une clé secrète correspondante est gardée collectivement par les validateurs de la co-chaîne.

5. Procédé selon la revendication 1, dans lequel le compte de la chaîne principale correspondant à la co-chaîne est commandé par une entité qui commande le compte sur la co-chaîne.

6. Procédé permettant à une ou plusieurs entités d'un système de chaîne de blocs d'effectuer une série d'opérations, dans lequel le système de chaîne de blocs comprend

   une chaîne principale (104),
   une co-chaîne (120, 140), dans lequel la co-chaîne a un compte correspondant sur la chaîne principale,
   un actif détenu par le compte correspondant sur la chaîne principale et détenu par un compte sur la co-chaîne,
   dans lequel le compte de co-chaîne possède l'actif,
   les opérations comprenant :

   la publication (402) d'une transaction authentifiée sur la co-chaîne, la transaction authentifiée autorisant un transfert de l'actif du compte de co-chaîne vers un autre compte de la chaîne principale ;
   la détermination que la transaction authentifiée est publiée sur la co-chaîne ; et
   la publication (406), sur la chaîne principale, d'une transaction affectant l'actif à l'autre compte de la chaîne principale.

7. Procédé selon la revendication 6, les opérations comprenant la génération d'une clé publique (144).

8. Procédé selon la revendication 6, dans lequel les validateurs authentifient une chaîne de données en utilisant une signature numérique d'un schéma de signature à seuil.

9. Procédé selon la revendication 8, dans lequel la signature numérique est générée par rapport à une clé publique qui est associée au compte de la chaîne principale, dans lequel une clé secrète correspondante est gardée collectivement par les validateurs de la co-chaîne.

10. Procédé selon la revendication 6, dans lequel le compte de la chaîne principale correspondant à la co-chaîne est commandé par une entité qui commande le compte sur la co-chaîne.

**11.** Procédé selon la revendication 6, les opérations comprenant :

la production, par des validateurs de la co-chaîne, de signatures partielles utilisables pour calculer une signature numérique basée sur une clé publique de destination, la signature numérique étant utilisable pour authentifier le transfert de l'actif vers le compte de la chaîne principale ; et
la publication de la signature numérique sur la chaîne principale pour l'autorisation du transfert de l'actif vers la clé publique sur la chaîne principale.

**12.** Système comprenant :

un ou plusieurs processeurs informatiques ; et
un ou plusieurs supports de stockage non transitoires stockant des instructions qui, lorsqu'elles sont exécutées par le ou les processeurs informatiques, entraînent la réalisation d'un procédé selon l'une quelconque des revendications 1 à 10.

**13.** Un ou plusieurs supports de stockage non transitoires stockant des instructions qui, lorsqu'elles sont exécutées par un ou plusieurs dispositifs informatiques, entraînent la réalisation d'un procédé selon l'une quelconque des revendications 1 à 11.

**FIG. 1**

FIG. 2

300

Generat a cryptoasset transaction on a first private blockchain to transfer a first amount of a first cryptoasset from a first cryptoasset account to a second cryptoasset account associated with a second private blockchain
304

Validate, by validator devices, the first cryptoasset transaction to generate a first commitment associated with a first one-time key
308

Post the first commitment on a public blockchain
312

Assign the first amount of the first cryptoasset to a key on the public blockchain
316

# FIG. 3

400

Post an authenticated transaction on a co-chain
402

Authenticate a data string specifying the asset to be transferred and a destination public key
404

Deliver the authenticated data string to the account of the main chain corresponding to the co-chain
406

Post, on the main chain, a transaction transferring the asset to the destination public key from the account of the main chain corresponding to the co-chain
408

FIG. 4

FIG. 5

**EP 4 032 052 B1**

**REFERENCES CITED IN THE DESCRIPTION**

**Patent documents cited in the description**

- CN 107767267
- WO 2018189658 A
- US 2016330034 A